# EUROPÄISCHE PATENTSCHRIFT

(11) **EP 1 025 556 B1**
(45) Veröffentlichungstag und Bekanntmachung des Hinweises auf die Patenterteilung: **08.05.2002**
(21) Anmeldenummer: 98952671.0
(22) Anmeldetag: 30.09.1998
(51) Int. Cl.: G08C 25/00

(54) **VERFAHREN UND SICHERHEITSEINRICHTUNG ZUM FERNSTEUERN VON SELBSTFAHRENDEN ARBEITSGERÄTEN**
METHOD AND SAFETY DEVICE FOR THE REMOTE-CONTROL OF SELF-PROPELLING WORKING MACHINES
PROCEDE ET MECANISME DE SECURITE POUR TELECOMMANDER DES ENGINS AUTOTRACTES

(30) Priorität: 22.10.1997 DE 19746700
(43) Veröffentlichungstag der Anmeldung: 09.08.2000
(73) Patentinhaber: WACKER-WERKE GMBH & CO. KG, 80809 München (DE)
(72) Erfinder: STEFFEN, Michael, D-82131 Stockdorf (DE)
(74) Vertreter: Hoffmann, Jörg Peter, Dr. Ing.
(86) Internationale Anmeldenummer: EP9806206
(87) Internationale Veröffentlichungsnummer: WO9921153

(56) Entgegenhaltungen:
- EP-A- 0 514 244
- DE-A- 19 600 791
- DE-C- 4 221 793

## Beschreibung

Die Erfindung betrifft ein Verfahren gemäß dem Oberbegriff des Anspruchs 1 und eine Sicherheitseinrichtung gemäß dem Oberbegriff von Anspruch 9.

Es ist ein Verfahren zum Fernsteuern von selbstfahrenden Arbeitsgeräten, insbesondere Bodenverdichtungsgeräten wie Walzen, Vibrationsplatten oder dergleichen bekannt, bei dem mittels einer von einer Bedienungsperson bedienbaren. vom Arbeitsgerät getrennten Sendeeinheit Steuersignale zu einer Empfangseinheit am Arbeitsgerät ausgesandt werden, die von der Empfangseinheit zur Erzeugung eines elektrischen Steuersignals zur Steuerung des Arbeitsgeräts verarbeitet werden.

Bei der Fernsteuerung von selbstfahrenden Arbeitsgeräten muß sichergestellt sein, daß ein ausreichender Sicherheitsabstand zwischen der Bedienungsperson und dem Arbeitsgerät aufrechterhalten wird, um eine Gefährdung der Bedienungsperson durch das fahrende Arbeitsgerät auszuschließen. Bei Grabenwalzen gibt es gesetzliche Vorschriften, die einen Mindestabstand zwischen der Grabenwalze und der Bedienungsperson vorschreiben. Beim Unterschreiten des Abstands müssen alle gefahrbringenden Bewegungen unterbunden werden, so daß die Grabenwalze sofort stillgesetzt werden muß.

Aus der DE 42 21 793 C1 ist eine Infrarot-Fernsteuerung für selbstfahrende Bodenverdichtungsgeräte bekannt, die von einem von der Bedienungsperson mitgeführten Steuergerät außer der zur funktionellen Steuerung des Arbeitsgeräts vorgesehenen infraroten Steuerstrahlung eine infrarote Nähbereichsstrahlung mit gegenüber der Steuerstrahlung wesentlich geringerer Intensität aussendet, so daß diese Nahbereichsstrahlung nur in der nahen Umgebung des Senders mit ausreichender Intensität empfangen werden kann. Beim Empfang dieser Nahbereichsstrahlung wird in der Empfangseinheit am Arbeitsgerät die Erzeugung von elektrischen, von der Steuerstrahlung veranlaßten Signalen unterdrückt, die sonst die Fahrt des Arbeitsgeräts bewirken.

Bei dieser Verfahrensweise kann das Arbeitsgerät bewegt werden, solange ein Sicherheitssignal nicht mit ausreichender Intensität beim Arbeitsgerät eintrifft. Schwächungen der Signalintensität, die nicht auf einem aus Sicherheitsgründen erforderlichen großen Abstand zwischen Sender und Empfänger beruhen, können zu einer Aufrechterhaltung der Bewegungsfähigkeit des Arbeitsgeräts führen, auch wenn der Sicherheitsabstand bereits unterschritten ist. Eine solche Fehlerquelle besteht darin, daß das Empfangsauge z.B. auf einer Grabenwalze, bezogen auf die Fortbewegungsrichtung, meist nicht mittig, sondern am bestimmungsgemäßen Führerplatz im Bereich einer der Stirnseiten angeordnet ist. Dadurch entsteht ein bezüglich der Grabenwalze unsymmetrisches Empfangsfeld, das dann, wenn sich die Bedienungsperson mit dem Sender vor der vom Empfangsauge abgewandten Stirnseite der Maschine befindet, den tatsächlichen Sicherheitsabstand zwischen Bedienungsperson und Maschine um die Entfernung verkürzt, die zwischen dieser Stirnseite und dem Empfangsauge besteht, also beispielsweise um 2 m gegenüber dem Sicherheitsabstand, der gegeben ist, wenn sich die Bedienungsperson vor der anderen Stirnseite der Maschine befindet. Wenn die Bedienungsperson sehr dicht vor der vom Empfangsauge abgewandten Stirnseite der Maschine steht, wird dieser Effekt noch dadurch verstärkt, daß die angenommenen 2 m Maschinenlänge, die zwischen Sender und Empfangsauge überbrückt werden müssen, die Strahlung abschirmen können. Während die schwachen Sicherheitssignale aus den genannten Gründen das Empfangsauge nicht erreichen können, treffen die starken Steuersignale, die von seitlichen Grabenwänden reflektiert werden können, am Empfangsauge ein und bewirken dadurch den Eindruck, es bestehe ein ausreichender Sicherheitsabstand.

Wenn sich das Empfangsauge für das Sicherheitssignal am Arbeitsgerät befindet, besteht eine Neigung zur Verschmutzung, die eine Signalschwächung zur Folge haben kann. Auch dadurch kann ein ausreichender Sicherheitsabstand vorgetäuscht werden, selbst wenn der vorgegebene Sicherheitsabstand bereits unterschritten ist.

Aus der DE 196 00 791 A1 ist eine Fernsteuerung bekannt, bei der aus den ausgesandten Signalen durch Auswertung von Phase bzw. Intensität der Signale auf den Abstand der Fernsteuergeräte von einem Arbeitsgerät geschlossen wird, um die Überschneidung von Wirkungsbereichen verschiedener Fernsteuerungen zu vermeiden. Zweck dieser Anordnung ist es, die Reichweite jedes Funksteuersenders auf einen festgelegten Arbeitsbereich möglichst genau zu begrenzen. um die Gefährdung von Arbeitskräften im Arbeits- und Wirkungsbereich der funkferngesteuerten Geräte zu vermeiden.

Der Erfindung liegt die Aufgabe zugrunde, das eingangs genannte Verfahren so auszugestalten, daß ein zuverlässigeres Sicherheitssignal zur Verfügung steht. Weiterhin liegt der Erfindung die Aufgabe zugrunde, eine geeignete Sicherheitseinrichtung anzugeben.

Die Lösung der Aufgabe besteht nach dem kennzeichnenden Teil des Anspruchs 1 darin, daß von der Sendeeinheit ausgehende und vom Arbeitsgerät reflektierte Signale von einem mit der Sendeeinheit verbundenen Empfänger als Sicherheitssignale aufgenommen werden, wenigstens ein entfernungsabhängiger Parameter der vom Empfänger aufgenommenen Sicherheitssignale überprüft und der Betrieb des Arbeitsgeräts unterbrochen wird, wenn der überprüfte Parameter das Unterschreiten eines vorgegebenen Sicherheitsabstandes zwischen dem Arbeitsgerät und dem Empfänger anzeigt.

Da bei der erfindungsgemäßen Verfahrensweise der Abstand zwischen der von der Bedienungsperson getragenen Sende- und Empfangseinheit für das Sicherheitssignal und der dem Sender zunächst gegenüberliegenden, das Sicherheitssignal reflektierenden Seite des Arbeitsgeräts gemessen wird, ist die durch eine unsymmetrische Anordnung des Empfangsauges am Arbeitsgerät verursachte Fehlerquelle ausgeschaltet. Da am Arbeitsgerät bezüglich des Sicherheitssignals keine Signalverarbeitung, sondern lediglich eine Reflexion stattfindet, ist das Risiko der Signalschwächung durch ein verschmutztes Empfangsauge stark reduziert, weil einerseits die Verschmutzungsgefahr für das vom Arbeitsgerät entfernt gelegene Empfangsauge an der Sendeeinheit wesentlich geringer ist und zudem jederzeit die Reinigung dieses Empfangsauges möglich ist, ohne den Sicherheitsabstand zwischen Bedienungsperson und Arbeitsgerät aufgeben zu müssen.

Vorteilhafterweise wird der Betrieb des Arbeitsgeräts unterbrochen wird, indem vor der Sendeeinheit ein Stopsignal ausgesendet oder die Aussendung der Steuersignale unterbrochen wird.

Eine einfache Ausführungsform besteht darin, daß die vom Arbeitsgerät reflektierten Steuersignale von dem mit der Sendeeinheit verbundenen Empfänger überprüft werden. Bei einer bevorzugten Ausgestaltung werden vom Sendegerät von den Steuersignalen getrennte Sicherheitssignale ausgesandt und nach Reflexion am Arbeitsgerät von dem mit der Sendeeinheit verbundenen Empfänger überprüft. Dabei können die Sicherheitssignale als elektromagnetische Strahlung ausgesandt oder aber im infraroten Frequenzbereich ausgestrahlt werden, wobei dann zur Feststellung der Einhaltung des Sicherheitsabstandes die Intensität der Sicherheitssignale überprüft werden kann. Es können aber auch die Sicherheitssignale als akustische Signale im Ultraschallbereich ausgesandt werden, wobei die Laufzeit der Sicherheitssignale zwischen Sender und Empfänger an der Sendeeinheit überprüft wird.

Gegenstand der Erfindung ist auch eine Sicherheitseinrichtung für ferngesteuerte, selbstfahrende Arbeitsgeräte zur Durchführung des erfindungsgemäßen Verfahrens mit einem von einer Bedienungsperson mitzuführenden Steuergerät, das einen Sender zum Aussenden von Steuersignalen an einen am Arbeitsgerät angeordneten und mit dessen Steuerung verbundenen Empfänger umfaßt, wobei erfindungsgemäß das Steuergerät mit einem Empfänger für vom Steuergerät ausgehende und vom Arbeitsgerät reflektierte Signale verbunden ist, dem eine Prüfschaltung zur Überprüfung wenigstens eines von der Entfernung zwischen der reflektierenden Oberfläche des Arbeitsgeräts und dem Empfänger abhängigen Parameters der empfangenen, reflektierten Signale zugeordnet ist, und die geeignet ist, beim Eintritt einer vorgegebenen Prüfbedingung den Betrieb des Arbeitsgeräts zu unterbrechen. Zur Unterbrechung des Betriebs des Arbeitsgeräts ist die Aussendung der Steuersignale unterbrechbar oder ein Stopsignal aussendbar.

Dabei umfaßt vorzugsweise das Steuergerät neben einem Sender für Steuersignale einen Sender für Sicherheitssignale, und der Empfänger des Steuergeräts ist auf die Sicherheitssignale abgestimmt.

Dabei kann der Sender für Sicherheitssignale ein Infrarotsender oder aber ein Ulträschallsender sein.

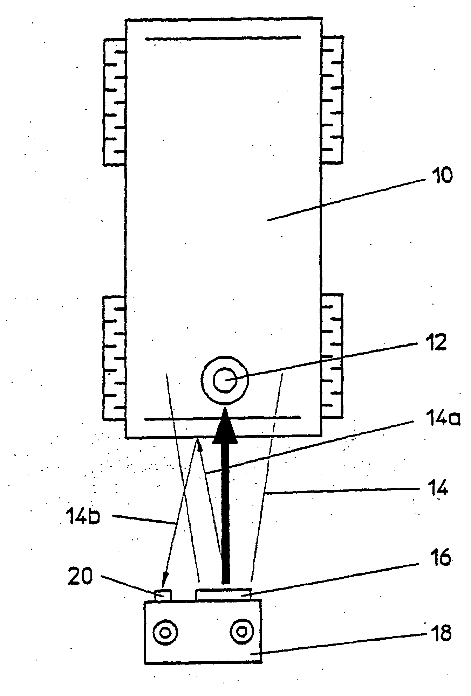

Anhand der nun folgenden Beschreibung eines in der einzigen Figur dargestellten Ausführungsbeispiels der Erfindung wird diese näher erläutert.

Die Figur zeigt in schematischer Draufsicht ein Arbeitsgerät in Form einer Grabenwalze und einen zugeordneten Infrarot-Handsender als Steuergerät.

Am einen Ende einer mittels Infrarotstrahlen fernsteuerbaren, selbstfahrenden Grabenwalze 10 befindet sich ein Empfangsauge 12 für die infraroten Steuerstrahlen 14, welche gerichtet aus einem Sendeauge 16 eines tragbaren Steuergeräts 18 austreten, das von einer Bedienungsperson getragen wird. Über diese Steuerstrahlen 14 werden von der Bedienungsperson in das Steuergerät eingegebene Steuerbefehle an die Steuerung der Grabenwalze 10 übertragen.

Von der Außenwand der Grabenwalze 10 wird die auftreffende Strahlung reflektiert, wie dies am Beispiel des Sendestrahls 14a und des reflektierten Strahls 14b gezeigt ist. Die reflektierte Strahlung gelangt dadurch zu einem am Steuergerät 18 vorgesehenen Reflex-Empfänger 20. Die an diesem Reflex-Empfänger 20 ankommenden Strahlen werden von einer im Steuergerät 18 untergebrachten, nicht dargestellten Prüfschaltung überprüft, um anhand wenigstens eines vorgewählten Parameters und eines ihm zugeordneten Grenzwertes festzustellen, ob sich das Steuergerät innerhalb oder außerhalb einer die Grabenwalze umgebenden Sicherheitszone befindet. Wird der Grenzwert überschritten, wird die Grabenwalze stillgesetzt, was z.B. dadurch geschehen kann, daß die Aussendung von Steuerbefehlen unterbunden oder ein Stopsignal ausgesendet wird.

Der Reflex-Empfänger 20 kann auf die vom Sendeauge 16 ausgehenden Steuersignale abgestimmt sein. Es können aber auch gesonderte Sicherheitssignale im Infrarot-Bereich ausgesandt werden, auf die der Reflex-Empfänger 20 abgestimmt ist. Hierbei können handelsübliche sog. "Lichttaster" benutzt werden. So ist es z.B. möglich, für die Übertragung der Steuerbefehle eine HF-Strahlung zu benutzen.

Bei Infrarot-Sicherheitssignalen kann die Intensität der reflektierten InfrarotStrahlung als Parameter für die Entfernung Steuergerät und Grabenwalze ausgewertet werden. Es können aber als Sicherheitssignale auch Ultraschallsignale ausgesandt werden, wobei dann die Laufzeit der Signale als Parameter benutzt werden kann.

## Patentansprüche

1. Verfahren zum Fernsteuern von selbstfahrenden Arbeitsgeräten (10), insbesondere Bodenverdichtungsgeräten wie Walzen, Vibrationsplatten oder dergleichen, bei dem mittels einer von einer Bedienungsperson bedienbaren, vom Arbeitsgerät getrennten Sendeeinheit (18) Steuersignale (14) zu einer Empfangseinheit (12) am Arbeitsgerät ausgesandt werden, die von der Empfangseinheit zu an die Steuerung des Arbeitsgeräts auszugebenden Steuerbefehlen verarbeitet werden, **dadurch gekennzeichnet, daß**
von der Sendeeinheit (18) ausgehende und vom Arbeitsgerät (10) reflektierte Signale (14b) von einem mit der Sendeeinheit verbundenen Empfänger (20) als Sicherheitssignale aufgenommen werden;
wenigstens ein entfemungsabhängiger Parameter der vom Empfänger (20) aufgenommenen Sicherheitssignale überprüft wird; und daß
der Betrieb des Arbeitsgeräts (10) unterbrochen wird, wenn der überprüfte Parameter das Unterschreiten eines vorgegebenen Sicherheitsabstandes zwischen dem Arbeitsgerät (10) und dem Empfänger (20) anzeigt.

2. Verfahren nach Anspruch 1, **dadurch gekennzeichnet, daß** der Betrieb des Arbeitsgeräts (10) unterbrochen wird, indem von der Sendeeinheit (18) ein Stopsignal ausgesendet oder die Aussendung der Steuersignale (14) unterbrochen wird.

3. Verfahren nach Anspruch 1, **dadurch gekennzeichnet, daß** die vom Arbeitsgerät (10) reflektierten Steuersignale (14b) von dem mit der Sendeeinheit (18) verbundenen Empfänger (20) überprüft werden.

4. Verfahren nach Anspruch 1, **dadurch gekennzeichnet, daß** von der Sendeeinheit (18) von den Steuersignalen getrennte Sicherheitssignale ausgesandt und nach Reflexion am Arbeitsgerät (10) von dem mit der Sendeeinheit verbundenen Empfänger (20) überprüft werden.

5. Verfahren nach Anspruch 4, **dadurch gekennzeichnet, daß** die Sicherheitssignale als elektromagnetische Strahlung oder im infraroten Frequenzbereich ausgesandt werden.

6. Verfahren nach Anspruch 5, **dadurch gekennzeichnet, daß** die Intensität der Sicherheitssignale überprüft wird.

7. Verfahren nach Anspruch 4, **dadurch gekennzeichnet, daß** die Sicherheitssignale als akustische Signale im Ultraschallbereich ausgesandt werden.

8. Verfahren nach Anspruch 7, **dadurch gekennzeichnet, daß** die Laufzeit der Sicherheitssignale überprüft wird.

9. Sicherheitseinrichtung für ferngesteuerte, selbstfahrende Arbeitsgeräte (10) zur Durchführung des Verfahrens nach einem der Ansprüche 1 bis 7, mit einem von einer Bedienungsperson mitzuführenden Steuergerät (18), das einen Sender (16) zum Aussenden von Steuersignalen (14) an einen am Arbeitsgerät (10) angeordneten und mit dessen Steuerung verbundenen Empfänger (12) umfaßt, **dadurch gekennzeichnet, daß** das Steuergerät (18) mit einem Empfänger (20) für vom Steuergerät (18) ausgehende und vom Arbeitsgerät (10) reflektierte Signale verbunden ist, dem eine Prüfschaltung zur Überprüfung wenigstens eines von der Entfernung zwischen der reflektierenden Oberfläche des Arbeitsgeräts (10) und dem Empfänger (20) abhängigen Parameters der empfangenen, reflektierten Signale zugeordnet ist, und die geeignet ist, beim Eintritt einer vorgegebenen Prüfbedingung den Betrieb des Arbeitsgeräts zu unterbrechen.

10. Sicherheitseinrichtung nach Anspruch 9, **dadurch gekennzeichnet, daß** zur Unterbrechung des Betriebs des Arbeitsgeräts (10) die Aussendung der Steuersignale unterbrechbar oder ein Stopsignal vom Steuergerät (18) aussendbar ist.

11. Sicherheitseinrichtung nach Anspruch 9, **dadurch gekennzeichnet, daß** das Steuergerät (18) neben einem Sender für Steuersignale einen Sender für Sicherheitssignale aufweist und der dem Steuergerät (18) zugeordnete Empfänger (20) auf die Sicherheitssignale abgestimmt ist.

12. Sicherheitseinrichtung nach Anspruch 11, **dadurch gekennzeichnet, daß** der Sender für Sicherheitssignale ein Infrarotsender ist und die Prüfschaltung geeignet ist, die Intensität der empfangenen, reflektierten Signale zu ermitteln.

13. Sicherheitseinrichtung nach Anspruch 11, **dadurch gekennzeichnet, daß** der Sender für Sicherheitssignale ein Ultraschallsender ist und die Prüfschaltung geeignet ist, die Laufzeit der empfangenen, reflektierten Signale zu ermitteln.

## Claims

1. Process for remote control of self-propelled tools (10), in particular ground compacting devices such as rollers, vibration plates or the like, wherein by means of a transmitting unit (18), which can be operated by an operating person and which is separate from the tool, control signals (14) are transmitted to a receiving unit (12) on the tool, which are processed by the receiving unit into control commands to be transmitted to the control system of the tool, **characterised in that**
signals (14b) issuing from the transmitting unit (18) and reflected by the tool (10) are received as safety signals by a receiver (20) connected to the transmitting unit;
at least one distance-dependent parameter of the safety signals received by the receiver (20) is checked; and that
the operation of the tool (10) is interrupted if the checked parameter indicates that there is less than a predetermined safety distance between the tool (10) and the receiver (20).

2. Process according to claim 1, **characterised in that** the operation of the tool (10) is interrupted if the transmitting unit (18) transmits a stop signal or the transmission of the control signals (14) is interrupted.

3. Process according to claim 1, **characterised in that** the control signals (14b) reflected by the tool (10) are checked by the receiver (20) connected to the transmitting unit (18).

4. Process according to claim 1, **characterised in that** safety signals separated from the control signals are transmitted by the transmitting unit (18) and, after reflection on the tool (10), are checked by the receiver (20) connected to the transmitting unit.

5. Process according to claim 4, **characterised in that** the safety signals are transmitted as electromagnetic radiation or in the infrared frequency range.

6. Process according to claim 5, **characterised in that** the intensity of the safety signals is checked.

7. Process according to claim 4, **characterised in that** the safety signals are transmitted as acoustic signals in the ultrasound range.

8. Process according to claim 7, **characterised in that** the transit time of the safety signals is checked.

9. Safety device for remote-controlled self-propelled tools (10) to carry out the process according to any one of claims 1 to 7, having a control device (18) carried by an operating person, which control device has a transmitter (16) to transmit control signals (14) to a receiver (12) disposed on the tool (10) and connected to the control system thereof, **characterised in that** the control device (18) is connected to a receiver (20) for signals issuing from the control device (18) and reflected by the tool (10), which is allocated a test circuit to check at least one parameter of the received reflected signals, which parameter is dependent on the distance between the reflecting surface of the tool (10) and the receiver (20), and which is able to interrupt operation of the tool if a predetermined checking condition occurs.

10. Safety device according to claim 9, **characterised in that** in order to interrupt operation of the tool (10) the transmission of the control signals can be interrupted or a stop signal can be transmitted by the control device (18).

11. Safety device according to claim 9, **characterised in that** the control device (18) has, in addition to a transmitter for control signals, a transmitter for safety signals, and the receiver (20) allocated to the control device (18) is tuned to the safety signals.

12. Safety device according to claim 11, **characterised in that** the transmitter for safety signals is an infrared transmitter and the test circuit is able to determine the intensity of the received reflected signals.

13. Safety device according to claim 11, **characterised in that** the transmitter for safety signals is an ultrasound transmitter and the test circuit is able to determine the transit time of the received reflected signals.

## Revendications

1. Procédé de télécommande d'engins de travail (10) automoteurs, en particulier d'engins de compactage du sol tels que rouleaux, plaques vibrantes ou similaires, dans lequel des signaux de commande (14) sont émis vers une unité de réception (12) sur l'engin de travail, au moyen d'une unité d'émission (18) séparée de l'engin de travail et pouvant être commandée par un opérateur, lesquels signaux sont traités par l'unité de réception en instructions de commande à transmettre à la commande de l'engin de travail, **caractérisé en ce que**
des signaux (14b), partant de l'unité d'émission (18) et réfléchis par l'engin de travail (19), sont reçus en tant que signaux de sécurité par un récepteur (20) relié à l'unité d'émission ;
au moins un paramètre dépendant de la distance des signaux de sécurité reçus par le récepteur (20), est vérifié ; et **en ce que**
le fonctionnement de l'engin de travail (10) est interrompu si le paramètre vérifié indique qu'une distance de sécurité prédéterminée entre l'engin de travail (10) et le récepteur (20) n'est pas atteinte.

2. Procédé selon la revendication 1, **caractérisé en ce que** le fonctionnement de l'engin de travail (10) est interrompu **en ce qu'**un signal de stop est émis par l'unité d'émission (18) ou l'émission des signaux de commande (14) est interrompue.

3. Procédé selon la revendication 1, **caractérisé en ce que** les signaux de commande (14b), réfléchis par l'engin de travail (10), sont vérifiés par le récepteur (20) relié à l'unité d'émission (18).

4. Procédé selon la revendication 1, **caractérisé en ce que** l'unité d'émission (18) émet des signaux de sécurité séparés des signaux de commande, qui, après réflexion sur l'engin de travail (10), sont vérifiés par le récepteur (20) relié à l'unité d'émission.

5. Procédé selon la revendication 4, **caractérisé en ce que** les signaux de sécurité sont émis sous la forme d'un rayonnement électromagnétique ou dans la gamme de fréquences infrarouge.

6. Procédé selon la revendication 5, **caractérisé en ce que** l'intensité des signaux de sécurité est vérifiée.

7. Procédé selon la revendication 4, **caractérisé en ce que** les signaux de sécurité sont émis en tant que signaux acoustiques dans le domaine des ultrasons.

8. Procédé selon la revendication 7, **caractérisé en ce que** la durée des signaux de sécurité est vérifiée.

9. Dispositif de sécurité pour engins de travail (10) automoteurs, télécommandé à distance, pour la mise en oeuvre du procédé selon l'une des revendications 1 à 7, comportant un appareil de commande (18) à emporter par un opérateur, qui comprend un émetteur (16) pour l'émission de signaux de commande (14) à un récepteur (12) disposé sur l'engin de travail (10) et relié à sa commande, **caractérisé en ce que** l'appareil de commande (18) est relié à un récepteur (20) de signaux partant de l'appareil de commande (18) et réfléchis de l'engin de travail (10), auquel est associé un circuit de vérification pour la vérification d'au moins un paramètre des signaux réfléchis reçus, qui dépend de la distance entre la surface réfléchissante de l'appareil de commande (10) et le récepteur (20), et qui est en mesure d'interrompre le fonctionnement de l'engin de travail, lorsque survient une condition de vérification prédéterminée.

10. Dispositif de sécurité selon la revendication 9, **caractérisé en ce que** pour interrompre le fonctionnement de l'engin de travail (10), l'émission des signaux de commande peut être interrompue ou un signal de stop peut être émis par l'appareil de commande (18).

11. Dispositif de sécurité selon la revendication 9, **caractérisé en ce que** l'appareil de commande (18) comporte, outre un émetteur de signaux de commande, un émetteur de signaux de sécurité et le récepteur (20), associé à l'appareil de commande (18), est accordé sur les signaux de sécurité.

12. Dispositif de sécurité selon la revendication 11, **caractérisé en ce que** l'émetteur des signaux de sécurité est un émetteur infrarouge et le circuit de vérification est en mesure de déterminer l'intensité des signaux réfléchis reçus.

13. Dispositif de sécurité selon la revendication 11, **caractérisé en ce que** l'émetteur des signaux de sécurité est un émetteur à ultrasons et le circuit de vérification est en mesure de déterminer la durée de parcours des signaux réfléchis reçus.
